# DEMANDE DE BREVET EUROPEEN

(11) **EP 1 564 076 A1**
(43) Date de publication de la demande: **17.08.2005**
(21) Numéro de dépôt: 05290300.2
(22) Date de dépôt: 10.02.2005
(51) Int. Cl.: B60R 13/02, B62D 25/20, B62D 21/17

(54) **Seuil de porte pour véhicule automobile, sous-ensemble d'habitacle et son procédé de réalisation, et faux-plancher double-coque.**

(30) Priorité: 10.02.2004 FR 0401297
(71) Demandeur: Faurecia Automotive Industrie, 92000 Nanterre (FR)
(72) Inventeur: Marcq, Philippe, 08210 Mouzon (FR)
(74) Mandataire: Domenego, Bertrand

(57) **Abrégé**

L'invention concerne un seuil de porte (10) de véhicule automobile interposé entre un joint d'étanchéité (5) comprenant des moyens de fixation (6) sur le dormant (1) de la porte du véhicule et un habillage de plancher (90) du véhicule automobile, comprenant des moyens d'association (11) avec le dormant de porte (1 ), et venant en recouvrement partiel du bord (9a) de l'habillage de plancher (90) en regard, selon l'invention comprend des moyens de solidarisation (14) avec l'habillage de plancher (90).

## Description

La présente invention concerne un seuil de porte de véhicule automobile.

Le seuil de porte est en général interposé entre le joint d'étanchéité du dormant de porte et le tapis d'habitacle. Il est fixé sur le bas de dormant de porte. Son rôle est double : d'une part assurer le maintien en position du tapis d'habitacle au voisinage du bas de dormant de porte par pincement du tapis entre le seuil de porte et la tôle du bas de dormant, et d'autre part assurer une fonction d'enjoliveur entre le joint d'étanchéité du dormant et le tapis d'habitacle.

Un premier inconvénient des bas de dormants de portes de véhicules automobiles résulte de ce que le joint d'étanchéité, et en particulier les moyens de montage du joint d'étanchéité sur le bas de dormant sont vulnérables et directement exposés aux agressions des objets chargés et/ou des personnes montant dans le véhicule. L'usure précoce de ces moyens de montage induit un défaut de qualité perçue et d'éventuels problèmes d'étanchéité de l'habitacle du véhicule.

Un autre inconvénient des bas de dormants de portes de véhicules automobiles résulte de ce que le tapis, pincé entre le seuil de porte et la tôle de bas de dormant peut se déchausser, créant là aussi un défaut de qualité perçue.

L'un des buts de la présente invention est de résoudre les problèmes ci-dessus évoqués en proposant un seuil de porte de véhicule amélioré.

Un autre but de la présente invention est de proposer un procédé de montage du seuil de porte selon l'invention améliorant le temps de cycle de montage.

A cet effet, l'invention concerne un seuil de porte de véhicule automobile interposé entre un joint d'étanchéité comprenant des moyens de fixation sur le dormant de la porte du véhicule et un habillage de plancher du véhicule automobile, comprenant des moyens d'association avec le dormant de porte, et venant en recouvrement partiel du bord de l'habillage de plancher en regard. Selon l'invention, le seuil de porte comprend des moyens de solidarisation avec l'habillage de plancher.

Selon une autre caractéristique de l'invention, le seuil de porte comprend une zone de recouvrement venant protéger les moyens de fixation du joint d'étanchéité.

Selon une autre caractéristique de l'invention, au moins une partie des moyens d'association avec le dormant de porte font partie des moyens de solidarisation avec l'habillage de plancher.

Alternativement, au moins une partie des moyens d'association avec le dormant de porte sont différents des moyens de solidarisation avec l'habillage de plancher.

L'invention concerne aussi un sous-ensemble d'habitacle de véhicule automobile comprenant un habillage de plancher disposé en regard d'au moins une partie du plancher du véhicule automobile, et un seuil de porte tel que décrit ci-dessus.

Dans un mode de réalisation, l'habillage de plancher comprend un faux-plancher suspendu reposant au moins partiellement sur le dormant de porte.

En particulier, le faux-plancher suspendu comprend une paroi supérieure et une paroi inférieure solidarisées l'une à l'autre, la paroi inférieure, reposant sur le dormant de porte et étant fixée sur le dormant de porte par les moyens d'association du seuil de porte avec le dormant, la paroi supérieure étant associée au seuil de porte par les moyens de solidarisation du seuil de porte.

L'invention comprend aussi un procédé d'assemblage d'un sous ensemble tel que décrit ci dessus dans lequel:
- on forme un habillage de plancher,
- on solidarise les seuils de porte sur l'habillage de plancher,
- on positionne le sous-ensemble ainsi réalisé dans un véhicule automobile, en regard de la partie de plancher à habiller, et
- on solidarise les seuils de porte et l'habillage de plancher au véhicule automobile par coopération des moyens d'association des seuils de porte
avec le dormant correspondant.

L'invention concerne enfin un faux-plancher double-coque pourvue de moyens d'intégration de câblage ou de tuyau d'aération au moins sur une partie de sa périphérie. Ce faux-plancher est de type suspendu double coque et présente une paroi supérieure et une paroi inférieure solidarisées localement l'une à l'autre. La paroi inférieure comprend des pattes de soutien venant de matière avec la paroi inférieure, également répartie le long d'un bord libre. En outre, la paroi inférieure présente, entre deux pattes consécutives, une butée de câble

L'invention sera mieux comprise à la lecture de la description qui va suivre, donnée uniquement à titre d'exemple, et faite en se référant aux dessins annexés, sur lesquels :
- la figure 1 est une vue partielle et schématique d'une partie inférieure de dormant de porte de véhicule automobile comprenant un seuil de porte et un sous-ensemble d'habitacle selon l'invention,
- la figure 2 est une vue schématique en coupe du dispositif de la figure 1
- la figure 3 est une vue schématique en coupe selon la ligne III-III de la figure 2
- la figure 4 est une vue schématique en coupe selon la ligne IV-IV de la figure 2
- la figure 5 est une vue schématique d'un dispositif de faux-plancher selon l'invention.
- les figures 6 et 7 sont des vues schématiques en coupe transversale d'une partie inférieure de dormant de porte de véhicule automobile comprenant un seuil de porte, un faux-plancher et un sous-ensemble d'habitacle selon l'invention.
- la figure 8 est une vue schématique en coupe d'une partie inférieure de dormant de porte de véhicule automobile comprenant un seuil de porte et un sous-ensemble d'habitacle selon un autre mode de réalisation de l'invention

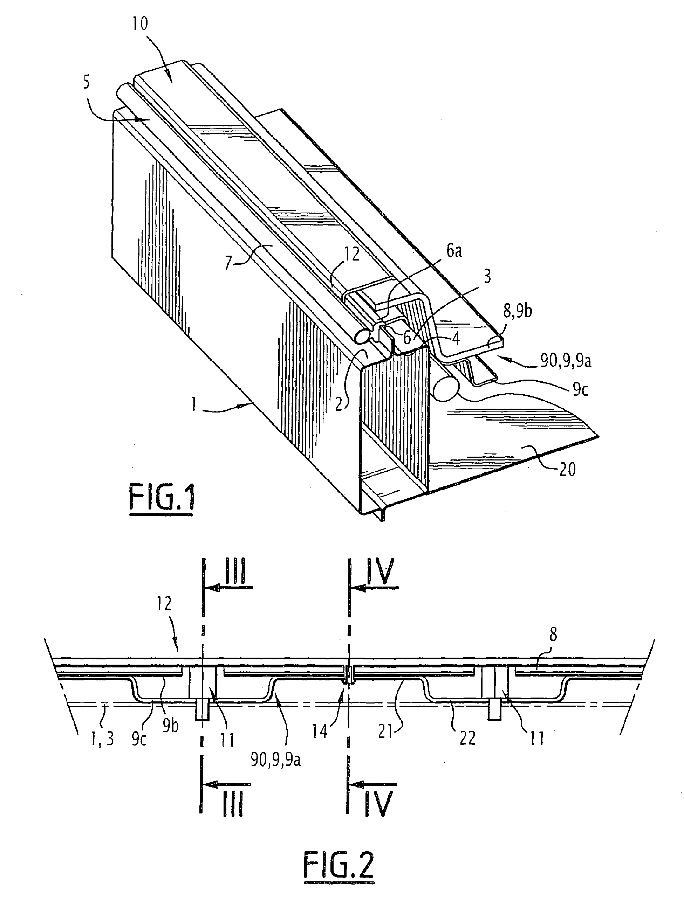

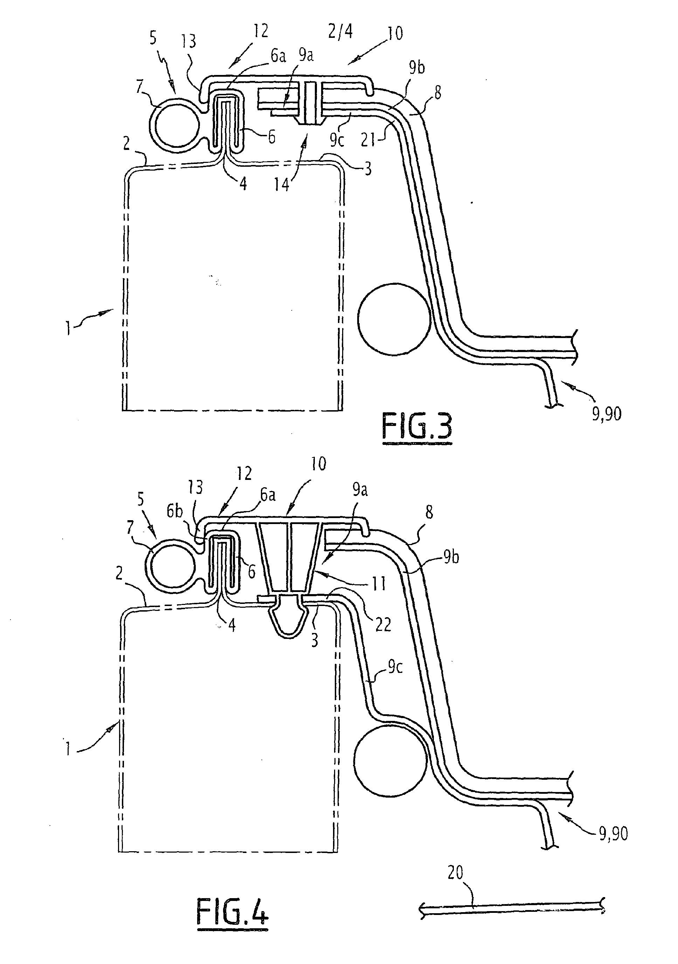

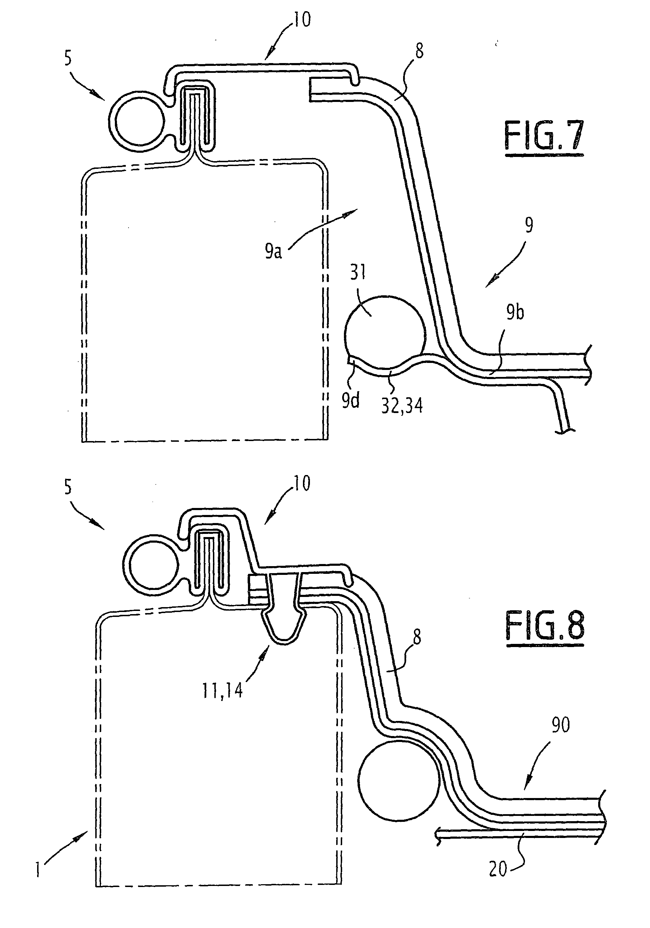

La partie inférieure d'un dormant de porte de véhicule automobile comprend :
- Un élément de carrosserie faisant partie de la structure du véhicule ou "caisse en blanc" que l'on définira dans la suite comme le dormant 1. Le dormant 1 représenté sur les figures est constitué d'une double coque en tôle ayant un épaulement externe 2, un épaulement interne 3, et une feuillure de tôle 4 à la jonction des deux coques de tôle. On définit, pour l'ensemble de la description, un élément externe comme étant tourné vers l'extérieur de l'habitacle du véhicule et un élément interne comme étant tourné vers l'intérieur de l'habitacle du véhicule.
- Un joint d'étanchéité 5 comprenant des moyens de montage 6 du joint d'étanchéité 5 sur le dormant et un boudin d'étanchéité externe 7. Ce joint d'étanchéité, en coopération avec la porte du véhicule, participe à la fermeture étanche de l'habitacle par rapport à l'extérieur. Dans le mode de réalisation représenté sur les figures, les moyens de montage 6 du joint d'étanchéité 5 comprennent une gorge élastique renforcée 6 de type caoutchouc synthétique ou équivalent, venant pincer la feuillure de tôle 4. Dans les parties inférieures de bas de porte de l'art antérieur, cette gorge 6 ne présente pas de protection. On comprend que lorsqu'une charge répétée (chargement ou passager) porte sur la partie transversale 6a de la gorge 6, il s'ensuit une usure puis une éventuelle rupture des moyens de montage 6 du joint d'étanchéité.
- Un habillage de plancher habitacle 90, venant en recouvrement partiel de l'épaulement interne 3 du dormant 1. Dans les modes de réalisations représentés sur les figures 1 à 7, l'habillage de plancher d'habitacle comprend un faux plancher 9 recouvert d'un tapis 8. Cependant, dans un mode de réalisation sans faux plancher, représenté figure 8, l'habillage de plancher 90 ne comprend qu'un tapis 8 reposant directement sur l'épaulement interne 3 et le plancher tôle 20 du véhicule.
- Un seuil de porte 10, adjacent au joint d'étanchéité 5, venant en recouvrement partiel de l'habillage de plancher 90 et de l'épaulement interne 3 du dormant 1, et comprenant des moyens d'association 11 avec l'épaulement interne 3 du dormant 1. En outre, le seuil 10 selon l'invention comprend :
   o Un recouvrement partiel 12 des moyens de montage 6 du joint d'étanchéité 5. Le seuil de porte 10, solidarisé à l'épaulement interne 3, est suffisamment rigide pour servir de bouclier contre les agressions des objets chargés et/ou personnes montant dans le véhicule. Avantageusement, le recouvrement partiel présente un renvoi 13 externe couvrant partiellement la paroi externe de la gorge 6.
   o Des moyens de solidarisation 14 avec l'habillage de plancher 90. Dans le mode de réalisation représenté sur les figures 1 à 7, l'habillage de plancher 90 comprend un faux-plancher 9 ayant un bord libre 9a en regard d'un dormant 1. Ce faux-plancher 9 est de type suspendu double coque et présente une paroi supérieure 9b recouverte par un tapis d'habitacle 8, et une paroi inférieure 9c reliées localement l'une à l'autre. Le bord libre de la paroi inférieure 9c présente une forme en créneaux, dont les parties haute 21 sont solidarisée à la paroi supérieure 9b, et les parties basses 22 reposent sur l'épaulement interne 3, et sont fixées sur l'épaulement interne 3 par les moyens d'association 11 du seuil de porte 10 avec l'épaulement interne 3. La paroi supérieure 9b et les parties hautes 21 des créneaux de la paroi inférieure 9c sont associées au seuil de porte 10 par les moyens de solidarisation 14 du seuil de porte 10.
Dans le mode de réalisation présenté sur la figure 8, il n'y a pas de faux-plancher 9. Dans ce cas, les moyens de solidarisation 14 entre le tapis d'habitacle 8 et le seuil de porte 10 sont avantageusement les mêmes que les moyens d'association 11 du seuil de porte 10 avec l'épaulement interne 3.

Les moyens de solidarisation 14, les moyens d'association 11, appelés conjointement les moyens de fixation 11,14, sont quelconques. Ils peuvent avantageusement être pourvus de dispositifs de compensation de jeu de montage dans les trois directions. Dans les modes de réalisation proposés dans les figures, il est proposé de façon non limitative, des moyens de clips coopérant avec des trous prévus dans le tapis d'habitacle 8, et/ou le faux-plancher 9, et/ou l'épaulement interne 3. Avantageusement, ces trous ont une forme oblongue permettant de compenser des jeux de montage selon au moins une direction. Avantageusement, certains moyens de fixation présentent une double fixation permettant dans un premier temps de solidariser les seuils de porte à l'habillage de plancher en vue de leur transport et positionnement dans le véhicule, puis dans un second temps de fixer au moins partiellement le sous-ensemble ainsi réalisé dans le véhicule.

La présente invention concerne aussi un procédé d'assemblage d'un sous ensemble tel que décrit ci-dessus dans lequel :
- on forme un habillage de plancher 90 par tout moyen connu,
- on solidarise les seuils de porte 10 sur l'habillage de plancher 90 par coopération des moyens de solidarisation 14 des seuils de porte 10 avec l'habillage de plancher 90,
- on positionne le sous-ensemble ainsi réalisé dans un véhicule automobile, en regard de la partie de plancher à habiller,
- on solidarise conjointement les seuils de porte 10 et l'habillage de plancher 90 au véhicule automobile par coopération des moyens d'association 11 des seuils de porte 10 avec le dormant 1 correspondant.

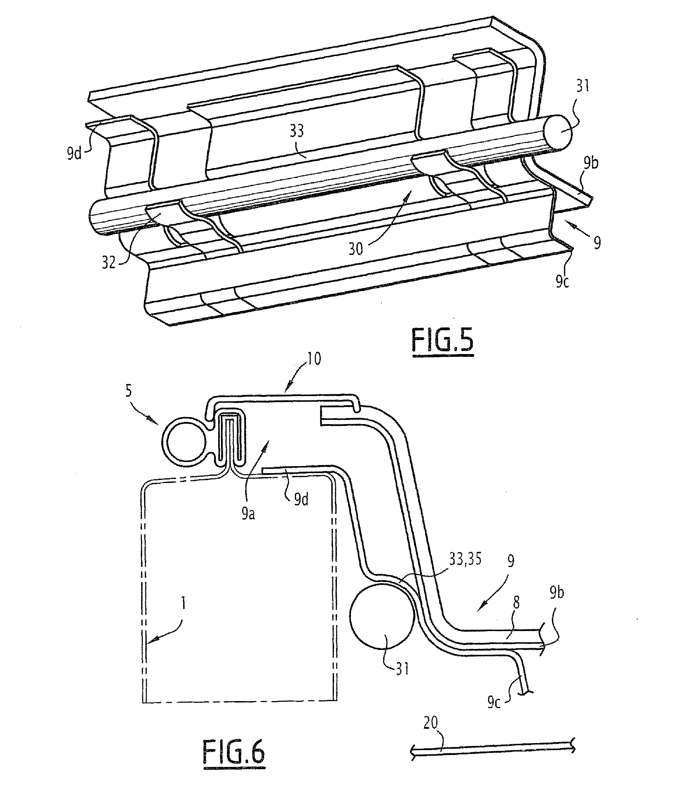

La présente invention concerne aussi un faux-plancher 9 double-coque pourvue de moyens de blocage 30 de câblage ou de tuyau d'aération 31 au moins sur une partie de sa périphérie. Ce faux-plancher 9 est de type suspendu double coque et présente une paroi supérieure 9b, et une paroi inférieure 9c solidarisées l'une à l'autre. La paroi inférieure 9c comprend des pattes de soutien 32 venant de matière avec la paroi inférieure 9c, également réparties le long d'un bord libre 9d. En outre, la paroi inférieure 9c présente, entre deux pattes 32 consécutives, une butée de câble 33. Dans la suite, on comprendra le terme transversal comme un plan perpendiculaire à l'axe du câble ou du tuyau à intégrer. En coupes transversales telles que représentées sur les figures 6 et 7, les pattes de soutien 32 et les butées de câble 33 présentent au moins une partie en arc de cercle 34,35 de rayon sensiblement équivalent au rayon du câble ou du tuyau 31 à intégrer, les arcs de cercle 34 des pattes de soutien 32 étant sensiblement opposées à ceux 35 des butées de câble 33.

Chaque patte de soutien 32 et les deux butées de câble 33 qui lui sont adjacentes constituent un moyen de blocage 30 d'un câble 31 le long du bord libre 9a du faux-plancher 9.

Dans la pratique, les câbles électriques ou les tuyaux d'aération 31, sont en général déposés libres sur le plancher du véhicule avant que l'habillage de plancher 90 ne soit monté. Afin d'éviter que ces câbles ou tuyaux 31 ne se déplacent et/ou ne constituent des guides de vibrations sonores du plancher en tôle vers l'habitacle, lors du montage du faux-plancher 9, une fois le faux plancher 9 positionné en regard de la partie de plancher à habiller, le faux-plancher 9 est maintenu en suspension à proximité de la partie de plancher à habiller, et l'opérateur se saisie du câble ou du tuyau 31 posé sur le plancher et l'emboîte dans les moyens de blocage 30 disposés sur la périphérie du faux plancher 9. Dans l'étape suivante, on solidarise le faux plancher 9 intégrant le câble et/ou le tuyau 31 au véhicule automobile.

## Revendications

1. Seuil de porte (10) de véhicule automobile destiné à être interposé entre un joint d'étanchéité (5) comprenant des moyens de fixation (6) sur un dormant (1) de la porte du véhicule automobile et un habillage de plancher (90) du véhicule automobile, le seuil de porte (10) comprenant des moyens d'association (11) avec le dormant (1) de porte, le seuil (10) étant destiné à venir en recouvrement partiel d'un bord de l'habillage de plancher (90) situé en regard du dormant (1) de porte, **caractérisé en ce qu'**il comprend des moyens de solidarisation (14) avec l'habillage de plancher (90), les moyens de solidarisation (14) permettant dans un premier temps la solidarisation du seuil (10) sur l'habillage de plancher (90), et les moyens d'association (11) permettant dans un deuxième temps la solidarisation du seuil (10) avec le dormant (1) de la porte.

2. Seuil de porte selon la revendication 1, comprenant une zone de recouvrement (12) destinée à venir protéger des moyens de fixation (6) du joint d'étanchéité (5).

3. Seuil de porte selon l'une des revendications 1 et 2, dans lequel au moins une partie des moyens d'association (11) avec le dormant de porte (1) font partie des moyens de solidarisation (14) avec l'habillage du plancher (90).

4. Seuil de porte selon l'une quelconque des revendications précédentes, dans lequel au moins une partie des moyens d'association (11) avec le dormant de porte (1) sont différents des moyens de solidarisation (14) avec l'habillage de plancher (90).

5. Sous-ensemble d'habitacle de véhicule automobile comprenant :
- un dormant (1) de porte du véhicule automobile ;
- un joint (5) d'étanchéité comprenant des moyens de fixation (6) sur le dormant (1);
- un habillage de plancher (90) disposé en regard d'au moins une partie du plancher (20) du véhicule automobile ; et
- un seuil de porte (10) interposé entre le joint d'étanchéité (5) et l'habillage du plancher (90), le seuil de porte (10) venant en recouvrement partiel d'un bord de l'habillage de plancher (90), le seuil (10) comprenant des moyens d'association (11) avec le dormant de porte (1) ;
**caractérisé en ce que** le seuil (10) comprend des moyens de solidarisation (14) avec l'habillage de plancher (90), les moyens de solidarisation permettant dans un premier temps la solidarisation du seuil (10) sur l'habillage de plancher (90), et les moyens d'association (11) permettant dans un deuxième temps la solidarisation du seuil (10) avec le dormant de porte (1).

6. Sous-ensemble selon la revendication 5, dans lequel le seuil (10) comprend une zone de recouvrement (12) venant protéger les moyens de fixation (6) du joint d'étanchéité (5).

7. Sous-ensemble selon l'une des revendications 5 et 6, dans lequel au moins une partie des moyens d'association (11) avec le dormant de porte (1) font partie des moyens de solidarisation (14) avec l'habillage du plancher (90).

8. Sous-ensemble selon l'une quelconque des revendications 5 à 7, dans lequel au moins une partie des moyens d'association (11) avec le dormant de porte (1) sont différents des moyens de solidarisation (14) avec l'habillage de plancher (90).

9. Sous-ensemble selon l'une quelconque des revendications 5 à 8, dans lequel le dormant (1) présente une feuillure de tôle (4) à la jonction de deux coques en tôle formant le dormant (1), les moyens de fixation (6) du joint (5) se présentant sous la forme d'une gorge venant pincer la feuillure de tôle (4).

10. Sous-ensemble selon l'une des revendications 8 et 9, dans lequel l'habillage de plancher (90) comprend un faux-plancher suspendu (9) reposant au moins partiellement sur le dormant de porte (1).

11. Sous-ensemble selon la revendication 10, dans lequel le faux-plancher suspendu (9) comprend une paroi supérieure (9b) et une paroi inférieure (9a) localement solidarisées l'une à l'autre, la paroi inférieure (9c) reposant sur le dormant de porte (1) et étant fixée sur le dormant de porte (1) par les moyens d'association (11) du seuil de porte (10) avec le dormant (1), la paroi supérieure (9b) étant fixée sur le seuil de porte (10) par les moyens de solidarisation (14) du seuil de porte (10).

12. Sous-ensemble selon la revendication 11, dans lequel la paroi inférieure (9c) présente une forme en créneaux, dont les parties hautes sont solidarisées à la paroi supérieure (9b), ces parties hautes étant solidarisées au seuil de porte (10) par les moyens de solidarisation (14), et les parties basses reposent sur le dormant (1) et sont fixées sur le dormant (1) par les moyens d'association (11) du seuil de porte (10).

13. Sous-ensemble selon l'une des revendications 11 et 12, dans lequel un bord libre (9d) de la paroi inférieure (9c) comprend des pattes de soutien (32) venant de matière avec la paroi inférieure (9c), et réparties le long du bord libre (9d) et en ce que la paroi inférieure présente, entre deux pattes (32) consécutives, une butée de câble, et en ce que chaque patte de soutien (32) et les deux butées de câble qui lui sont adjacentes constituent ensemble des moyens de blocage (30) de câblage et/ou de tuyaux (31).

14. Sous-ensemble selon la revendication 13, dans lequel les pattes de soutient (32) sont également réparties le long du bord libre (9d) de la paroi inférieure (9c).

15. Procédé d'assemblage d'un sous-ensemble selon l'une quelconque des revendications 5 à 14, dans lequel :
- on forme un habillage de plancher (90), on solidarise le seuil de porte (10) sur l'habillage de plancher par coopération d'un moyen de solidarisation (14) des seuils de porte (10) avec l'habillage de plancher (90),
- on positionne le sous-ensemble (10, 90) ainsi réalisé dans un véhicule automobile, en regard de la partie de plancher (20) à habiller, et
- on solidarise les seuils de porte (10) et l'habillage de plancher (90) au véhicule automobile par coopération des moyens d'association (11) des seuils de porte (10) avec le dormant (1) correspondant.

16. Habillage de plancher (90) pour véhicule automobile, l'habillage de plancher (90) présentant un bord destiné à venir en regard d'un dormant
(1) d'une porte de véhicule automobile, **caractérisé en ce que** l'habillage de plancher (90) comprend un seuil de porte (10) de véhicule automobile selon l'une quelconque des revendications 1 à 4, fixé sur un bord (9a) de l'habillage de plancher (90) par l'intermédiaire des moyens de solidarisation (14).

17. Habillage de plancher (90) selon la revendication 16, dans lequel le seuil de porte recouvre partiellement le bord (9a) de l'habillage de plancher (90).

18. Faux-plancher double-coque destiné à être monté en regard d'une partie de plancher (20) d'un véhicule automobile comprenant une paroi supérieure (9b) et une paroi inférieure (9c) solidarisées localement l'une à l'autre et des moyens de blocage (30) de câblage et/ou de tuyaux (31), **ca** **ractérisé en ce qu'**un bord libre (9d) de paroi inférieure (9c) comprend des pattes de soutien (32) venant de matière avec la paroi inférieure (9c), également réparties le long du bord libre (9d) et en ce que la paroi inférieure (9c) présente, entre deux pattes (32) consécutives, une butée de câble (33), et en ce que chaque patte de soutien (32) et les deux butées de câble (33) qui lui sont adjacentes constituent un ensemble un des moyens de blocage (30).
